# EUROPÄISCHE PATENTSCHRIFT

(11) **EP 3 048 413 B1**
(45) Veröffentlichungstag und Bekanntmachung des Hinweises auf die Patenterteilung: **07.03.2018**
(21) Anmeldenummer: 15003186.2
(22) Anmeldetag: 06.11.2015
(51) Int. Cl.: G01B 21/04, G01B 5/008, G01B 7/008, G01B 11/00, B23Q 7/10

(54) **MESSMASCHINE ZUM VERMESSEN VON WERKSTÜCKEN**
MEASURING MACHINE FOR MEASURING WORKPIECES
MACHINE DE MESURE DE PIECES A USINER

(30) Priorität: 23.01.2015 CH 862015
(43) Veröffentlichungstag der Anmeldung: 27.07.2016
(73) Patentinhaber: Erowa AG, 5734 Reinach (CH)
(72) Erfinder: Hediger, Hans, CH-5734 Reinach (CH)
(74) Vertreter: Hering, Hartmut

(56) Entgegenhaltungen:
- EP-A1- 0 568 798
- DE-A1- 3 417 741
- US-A- 4 305 130
- US-A- 4 631 834
- US-A- 5 028 901
- US-A- 5 918 378
- US-A- 5 945 009
- US-A1- 2010 250 178
- US-B1- 7 177 459

## Beschreibung

Die Erfindung betrifft eine Messmaschine zum Vermessen von Werkstücken. Gattungsgemässe Messmaschinen werden zumeist als Koordinatenmessgeräte bzw. Koordinatenmessmaschinen bezeichnet. Solche Messmaschinen sind mit einem Maschinentisch versehen, auf dem das zu vermessende Werkstück festgespannt oder platziert wird. Zum Vermessen des Werkstücks weist die Messmaschine eine Mechanik auf, mittels welcher ein Sensor in zumindest drei Koordinatenachsen derart verfahrbar ist, dass die Oberfläche des Werkstücks abgetastet bzw. vermessen werden kann. Vorzugsweise ist auf dem Maschinentisch eine Spannvorrichtung angeordnet, mittels welcher das Werkstück oder eine das Werkstück tragende Palette -Werkstückträgerfixiert werden kann. Bevorzugt wird das Werkstück jedoch auf einer Palette befestigt, welche mit Positioniermitteln und einem Spannzapfen o.ä. versehen ist, so dass das Werkstück wiederholt einfach und schnell an der mit korrespondierenden Positioniermitteln versehenen Spannvorrichtung festgespannt werden kann. Eine derartige Spannvorrichtung -Kupplungsvorrichtung- ist beispielsweise aus der EP 111 092 bekannt. Üblicherweise werden die zu vermessenden Werkstücke manuell oder mittels eines Handhabungsgeräts -Roboter- an den Messplatz überführt bzw. an die Spannvorrichtung übergeben. Das manuelle Zuführen der Werkstücke bedingt jedoch, dass eine Bedienperson für diese Aufgabe abgestellt werden muss, was naturgemäss mit entsprechenden Kosten verbunden ist. Das maschinelle Zuführen der Werkstücke mittels eines Handhabungsgeräts ist ebenfalls kostspielig, da die Anschaffung eines für den genannten Einsatzzweck geeigneten Handhabungsgeräts, üblicherweise ein 2 bis 6 Achsen-Roboter, nicht unerheblich ist. Ein weiterer Nachteil bei der Verwendung eines Handhabungsgeräts besteht darin, dass dieses Platz beansprucht.

In der DE 3417741 A1 ist eine Einrichtung zum Messen und wahlweisen Bereitstellen von Werkstücken aus einer Bereitstellungsposition in eine Bearbeitungsposition beschrieben. Die Einrichtung ist in der Form eines Ladeportals aufgebaut, das aus zwei Stützen und einem Querriegel besteht. An dem Querriegel ist ein Schlitten verschiebbar angeordnet, der seinerseits eine Pinole trägt. Die Pinole ist mit einem Messtaster ausgerüstet. In der Beschreibung wird ausgeführt, dass an die Stelle der Pinole mit dem Messtaster an dem Schlitten ebenso auch ein oder mehrere Greifer angebaut sein können, mit denen ein Werkstück von einer Bereitstellungsposition in eine Arbeitsposition einer Drehmaschine oder eines Bearbeitungszentrums gebracht werden können. Das Werkstück selber wird mittels Haltern auf dem Messtisch befestigt.

In der DE 4227817 A1 ist ein Mehrfach-Messsystem für Oberflächen offenbart. Dieses System umfasst einen Messtisch, auf dem das zu messende Objekt fixiert ist. Auf dem Messtisch ist eine Positioniervorrichtung, die einen Messkopfhalter trägt, verfahrbar abgestützt. An dem Messkopfhalter können unterschiedliche Messelemente, namentlich ein Taster oder ein Moire-Messkopf, befestigt werden. Auf dem Messtisch ist zudem ein Magazin zur Aufnahme der verschiedenen Messelemente angeordnet.

Aus der US 4 305 130 A ist ein Roboter-System bekannt, das einen sechs-Achsen Roboter umfasst. Dem Roboter sind ein Abbildungssystem und ein Rechner zugeordnet. Der Roboter weist u.a. einen Arm mit einer daran angeordneten Gelenkhand auf. Das Abbildungssystem umfasst eine an dem Arm angeordnete erste Videokamera, mittels welcher die Position eines zu erfassenden Werkstücks bestimmt werden kann. An der Hand des Roboters ist endseitig ein Vakuumgreifer befestigt. Mittels des Roboters können nicht ausgerichtete Werkstücke aus einem Vorratsbehälter entnommen und an eine Zwischenstation oder eine Endstation übergeben werden. Um die Position und Ausrichtung des Werkstücks nach der Entnahme aus dem Vorratsbehälter zu bestimmen, wird dieses durch den Roboter in eine Erfassungsposition gebracht, wo dessen Position und Ausrichtung mittels einer zweiten auf einer Stütze stationär angeordneten Videokamera erfasst und bestimmt wird. Danach wird das Werkstück von dem Roboter in einer bestimmten Ausrichtung an die Zwischenstation oder die Endstation übergeben.

Die US 7 177 459 B1 offenbart ein Roboter-System mit einer Bildverarbeitungsfunktion, das in der Lage ist, die Position und/oder Orientierung einzelner Werkstücke, die zufällig übereinander angeordnet sind, zu erkennen. Dadurch kann eine Orientierung oder eine Orientierung und Position einer Roboteroperation ermittelt werden, welche für die Position und/oder Orientierung des Werkstücks geeignet ist.

Die US 2010/250178A1 beschreibt ein Formmessinstrument, umfassend eine Koordinatenmessmaschine mit einem Drehtisch zur Aufnahme eins Werkstücks und einem Analysegerät. Die Koordinatenmessmaschine weist einen Bewegungsmechanismus auf, mittels welchem ein mit einer Tastspitze versehener Messfühler dreidimensional beweglich ist, wobei keine Mechanik vorgesehen ist, um die zu vermessenden Werkstücke von der Lagerstelle an den Messplatz zu überführen und wieder daraus zu entnehmen.

In der EP 0 568 798 A1 ist ein aus Baugruppen zusammengesetztes Bearbeitungszentrum offenbart. Dieses umfasst einen Maschinengrundkörper, an dem eine in mehreren Achsen verstellbare Hauptspindel angeordnet ist. Die Verkleidung des Maschinengrundkörpers ist als Container ausgebildet und kann Steuerungselemente und die Energieversorgung aufnehmen. Zur Überprüfung der zu bearbeitenden Werkstücke ist ein an einem Revolverkopf angeordneter Messtaster vorgesehen.

Die US 5 945 009 A offenbart eine Einrichtung zum funkenerosiven Bearbeiten von Werkstücken. Diese umfasst eine Erodiermaschine, in deren Arbeitsraum ein Werkstückhalter und ein Schlitten mit einem Werkzeugträger angeordnet sind. Der Werkstückhalter ist in Bezug auf den Werkzeugträger längs drei Achsen gesteuert bewegbar. Zum Austauschen von Werkstücken zwischen einem Magazin und dem Werkstückhalter ist ein Greifer in in einem Abstand vom Werkzeugträger am Schlitten angeordnet.

Die US 5 028 901 A beschreibt ein Magazin für Koordinatenmessgeräte oder Werkzeugmaschinen. Das Magazin weist mehrere Magazinplätze auf, wobei jedem Magazinplatz zumindest ein Permanentmagnet zugeordnet ist, um Messtaster bzw. Werkzeuge durch Magentkräfte zu halten.

Aus der US 5 918 378 A ist ein lösbarer Kupplungsmechanismus zum Fixieren eines Tasters an einem beweglichen Arm einer Kooridnatenmessmaschine bekannt. Der Kupplungsmechanismus umfasst zwei Kupplungselemente, wobei eines mit dem Arm und das andere mit dem Taster verbindbar ist und wobei jedes dieser Kupplungselemente mit einem ferromagnetischen Element versehen ist.

Schliesslich ist in der US 4 631 834 A ein Koordinatenmessgerät beschrieben. Dieses umfasst einen in der Y-Richtung bewegbaren Tisch, einen über einen Ständer sowie einen Querbalken in der X-Richtung bewegbaren Schlitten sowie ein Z-Achsen Tragwerk. Das Z-Achsen Tragwerk besitzt eine Kupplunsgeinrichtung, mittels welcher verschiedene Tastköpfe an und abgekoppelt werden können. Auf dem Tisch ist Tastkopf-Lagerständer angeordnet, welcher der Aufnahme mehrerer Tastköpfe dient.

Aufgabe der Erfindung ist es, eine dem eingangs genannten technischen Gebiet zugehörende Messmaschine zu schaffen, welche ein maschinelles Zuführen der zu vermessenden Werkstücke zu der auf dem Maschinentisch der Messmaschine angeordneten Spannvorrichtung bzw. eine Entnahme daraus ermöglicht, ohne dass dazu ein separates, mehrachsiges Handhabungsgerät vorgesehen werden muss.

Die Lösung der Aufgabe ist durch die Merkmale des Anspruchs 1 definiert. Gemäss der Erfindung ist der Messmaschine eine Lagerstelle zur Aufnahme einer Mehrzahl von zu vermessenden Werkstücken zugeordnet oder die Messmaschine weist eine Lagerstelle zur Aufnahme einer Mehrzahl von zu vermessenden Werkstücken auf, wobei die Pinole derart ausgebildet ist, dass zusätzlich zu dem Sensor auch ein Greifer daran fixiert ist, mittels welchem ein Werkstück von der Lagerstelle an die Spannvorrichtung übergeben bzw. aus der Spannvorrichtung entnommen und an die Lagerstelle übergeben werden kann. Durch die erfindungsgemässe Gestaltung der Messmaschine kann deren bestehende Mechanik genutzt werden, um die zu vermessenden Werkstücke von der Lagerstelle an den Messplatz, namentlich die Spannvorrichtung, zu überführen und wieder daraus zu entnehmen. Dadurch können Kosteneinsparungen erzielt werden, da weder eine Bedienperson noch ein separates Handhabungsgerät zum Zuführen der zu vermessenden Werkstücke an den Messplatz auf dem Maschinentisch bzw. zur Entnahme von dem Messplatz und zur Übergabe an eine Lagerstelle vorgesehen werden muss.

Eine derartige Messmaschine kann mittels der bestehenden Mechanik die Werkstücke aus einer Lagerstelle entnehmen, diese an den Messplatz übergeben, die Werkstücke dort vermessen und danach wieder an eine Lagerstelle übergeben. Es versteht sich, dass für die zu vermessenden Werkstücke und die bereits vermessenen Werkstücke ggf. separate Lagerstellen vorgesehen werden können.

Sofern die zu vermessenden Werkstücke auf Paletten angeordnet sind, wie dies bei einer bevorzugten Variante vorgesehen ist, ist die Messmaschine vorzugsweise derart gestaltet, dass die Spannvorrichtung zum Festspannen der mit Werkstücken bestückten Paletten ausgebildet ist und der Greifer dem Erfassen der mit Werkstücken bestückten Paletten dient. Die mit Werkstücken bestückten Paletten können mittels der Spannvorrichtung schnell und wiederholbar genau festgespannt werden.

Bei einer bevorzugten Weiterbildung der Messmaschine umfasst die Mechanik einen in einer ersten Linearachse bewegbaren Messschlitten und einen an dem Messschlitten angeordneten, in einer zweiten Linearachse bewegbaren Querschlitten, wobei die Pinole an dem Querschlitten angeordnet und in einer dritten Linearachse bewegbar ist. Eine solche Gestaltung ermöglicht einerseits eine massive Bauweise und andererseits ein Bewegen der Pinole in drei Achsen.

Besonders bevorzugt sind der Sensor und/oder der Greifer austauschbar an der Pinole angeordnet. Diese Ausbildung erlaubt ein Entfernen und wieder Ankoppeln des Sensors und/oder des Greifers an der Pinole. Auch ein Zwischenlagern des Sensors und/oder des Greifers wird dadurch ermöglicht.

Vorzugsweise wird der Sensor mittels eines Messkopfs an der Pinole angeordnet. Das Vorsehen eines Messkopfs erleichtert die Montage und ggf. den Austausch des Sensors.

Vorzugsweise ist der Sensor mittels einer Kupplungsvorrichtung am Messkopf und/oder der Greifer mittels einer Kupplungsvorrichtung an der Pinole befestigt. Diese Ausbildung erlaubt ein einfaches Entfernen und ein schnelles, positionsdefiniertes Ankoppeln des Sensors und/oder des Greifers an der Pinole. Auch ein Zwischenlagern des Sensors und/oder des Greifers, ggf. in einer Lagerstelle, wird dadurch erleichtert.

Vorzugsweise umfasst die Messmaschine als Lagerstelle zumindest ein im Bewegungsbereich des Greifers angeordnetes Magazin zur Aufnahme von Werkstücken und/oder Paletten. In einem solchen Magazin kann ggf. eine grössere Anzahl Werkstücke, Paletten oder mit Werkstücken bestückte Paletten zwischengelagert werden. Dadurch wird eine grosse Autonomie dahingehend ermöglicht, dass das Magazin mit einer grossen Anzahl an zu vermessenden Werkstücken bestückt werden kann, bzw. eine grosse Anzahl an vermessenen Werkstücken darin aufgenommen bzw. zwischengelagert werden kann. Ein solches Magazin kann eignet sich zudem zur Aufnahme bzw. zum Zwischenlagern zumindest eines Messkopfs und/oder zumindest eines Sensors und/oder zumindest eines Greifers. Es versteht sich, dass auch mehrere ggf. unterschiedliche und ggf. auch an verschiedenen Positionen angeordnete Magazine vorgesehen werden können.

Besonders bevorzugt ist das Magazin bzw. sind die Magazine derart an der Messmaschine angeordnet, dass Werkstücke oder mit Werkstücken bestückte Paletten manuell oder mittels eines Handhabungsgeräts von einer externen Stelle an das jeweilige Magazin übergeben und wieder daraus entnommen werden können. Diese Ausbildung erlaubt, die Messmaschine bzw. das Magazin je nach Bedarf entweder manuell oder ggf. maschinell mit zu vermessenden Werkstücken zu bestücken und die vermessenen Werkstücke wieder daraus zu entnehmen.

Eine bevorzugte Weiterbildung der Messmaschine sieht vor, dass auf dem Maschinentisch eine mit Positioniermitteln versehene Spannvorrichtung angeordnet ist, mittels welcher eine Palette zumindest in X- und Y-Richtung exakt positionierbar ist. Dadurch wird ein schnelles und genaues Positionieren von Paletten bzw. mit Werkstücken bestückten Paletten auf dem Maschinentisch ermöglicht.

Besonders bevorzugt sind die Positioniermittel derart ausgebildet, dass die Palette zusätzlich auch in Z-Richtung sowie zumindest um eine Drehachse positionierbar ist. Dadurch wird ermöglicht, auch nicht rotationssymmetrisch ausgebildete palettierte Werkstücke räumlich exakt und winkelgenau zu positionieren und fixieren.

Eine weitere, bevorzugte Weiterbildung sieht vor, dass die Mechanik den Messkopf und/oder den Sensor und/oder den Greifer an eine Lagerstelle übergeben und/oder daraus entnehmen kann. Diese Ausbildung ermöglicht, den Messkopf und/oder den Sensor und/oder den Greifer bedarfsgerecht auszutauschen oder zwischenzulagern.

Vorzugsweise ist der Greifer als Fingergreifer, Parallelgreifer, Gabelgreifer, Magnetgreifer oder Vakuumgreifer ausgebildet. Derartige Greifer sind bewährt und in unterschiedlichen Ausführungsformen erhältlich. Sie arbeiten zudem zuverlässig und sind ggf. kostengünstig.

Eine weitere Aufgabe der Erfindung besteht darin, ein Verfahren zum Vermessen eines Werkstücks mittels einer nach einem der vorhergehenden Ansprüche ausgebildeten Messmaschine vorzuschlagen, welches sich in wirtschaftlicher Hinsicht besonders eignet, um das zu vermessende Werkstück in die Spannvorrichtung der Messmaschine zu überführen bzw. daraus zu entnehmen.

Die Lösung der Aufgabe ist durch die Merkmale des Anspruchs 13 definiert. Definitionsgemäss wird das zu vermessende Werkstück oder eine mit dem zu vermessenden Werkstück bestückte Palette mittels des Greifers aus der Lagerstelle entnommen und an die Spannvorrichtung übergeben, wobei danach die Oberfläche des Werkstücks mittels des Sensors erfasst bzw. abgetastet wird und wobei nach dem Ende des Messvorgangs das Werkstück oder die mit dem Werkstück bestückte Palette mittels des Greifers aus der Spannvorrichtung entnommen und an eine Lagerstelle übergeben wird.

Eine bevorzugte Weiterbildung des Verfahrens sieht vor, dass der Messkopf und/oder der Sensor vor der Entnahme eines Werkstücks aus der Lagerstelle und/oder vor der Entnahme eines Werkstücks aus der Spannvorrichtung von der Pinole abgekoppelt und an eine Lagerstelle ausgelagert wird. Dadurch kann ein Beschädigen des Messkopfs bzw. Sensors während des Bewegens der Pinole zu dem Messplatz bzw. zu der Lagerstelle verhindert werden.

Eine weitere bevorzugte Weiterbildung sieht zudem vor, dass der Greifer vor dem Vermessen eines Werkstücks von der Pinole abgekoppelt und an eine Lagerstelle übergeben wird. Dadurch kann ein allfälliger Einfluss des Greifers auf den Messvorgang bzw. die Messgenauigkeit vermieden werden.

Schliesslich sieht ein besonders bevorzugtes Verfahren vor, dass der Greifer vor der Entnahme eines Werkstücks aus der Lagerstelle bzw. vor der Entnahme eines Werkstücks aus der Spannvorrichtung an die Pinole angekoppelt wird. Dies ist notwendig, damit nach einem allfälligen Abkoppeln des Greifers dieser wieder an der Pinole befestigt ist und somit ein Beladen bzw. Entladen der Lagerstelle mittels des Greifers ermöglicht wird.

Nachfolgend wird ein bevorzugtes Ausführungsbeispiel der Erfindung anhand von Zeichnungen näher erläutert. Dabei zeigt:
- Fig. 1: eine perspektivische Ansicht auf die Vorderseite/Bedienseite der Messmaschine in teilweise geschnittener Darstellung;
- Fig. 2: eine perspektivische Ansicht auf die Rückseite der Messmaschine;
- Fig. 3: einen vergrösserten Ausschnitt aus der Darstellung gemäss Fig. 1;
- Fig. 4: ein Detail der Messmaschine in nochmals vergrösserter Darstellung;
- Fig. 5: die Messmaschine in einer schematischen Seitenansicht in geschnittener Darstellung.

Grundsätzlich sind in den Figuren gleiche Teile mit gleichen Bezugszeichen versehen.

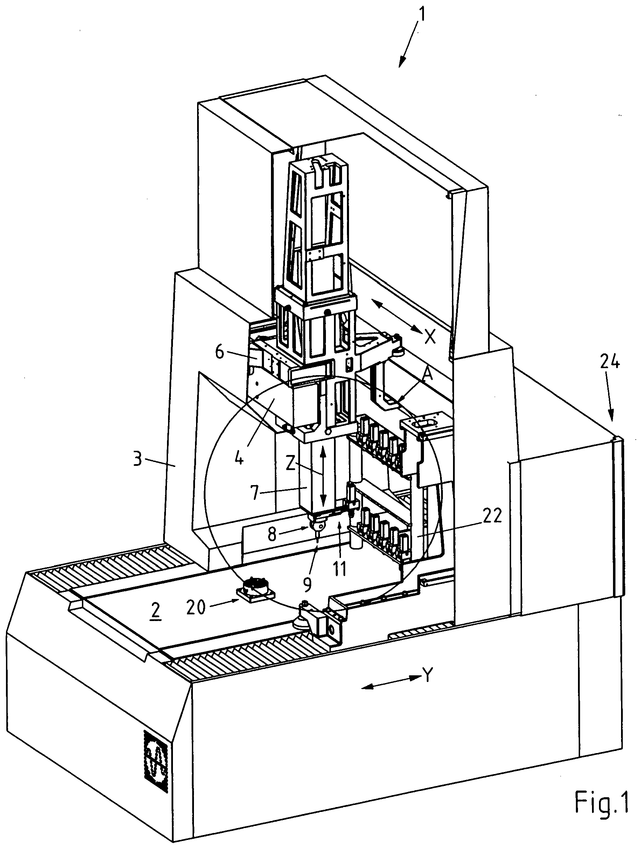

Die Figur 1 zeigt eine perspektivische Ansicht auf die Vorderseite der Messmaschine in teilweise geschnittener Darstellung. Da gattungsgemässe Messmaschinen grundsätzlich bekannt sind, wird nachfolgend insbesondere nur auf deren wichtigste Bestandteile bzw. auf die im Zusammenhang mit der Erfindung relevanten Elemente eingegangen.

Die Messmaschine 1 weist einen stabilen Maschinentisch 2 auf, auf dem eine Spannvorrichtung 20 zum Fixieren eines Werkstücks bzw. einer Palette befestigt ist. Auf dem Maschinentisch 2 ist ein Messschlitten 3 angeordnet, der entlang einer ersten Linearachse, hier als Y-Achse bezeichnet, verfahrbar ist. Der Messschlitten 3 ist mit einem oberen Querträger 4 versehen, an dem ein entlang einer zweiten Linearachse, hier als X-Achse bezeichnet, bewegbarer Querschlitten 6 angeordnet ist. Der Querschlitten 6 lagert eine Pinole 7, die entlang einer dritten Linearachse, hier als Z-Achse bezeichnet, bewegbar ist. Am unteren freien Ende der Pinole 7 ist ein Messkopf 8 angeordnet, der mit einem Sensor 9 versehen ist. Der Begriff Sensor steht hier stellvertretend für jegliche Art von Detektor, Taster, Aufnehmer, Fühler oder dergleichen. Als Sensor 9 kommt im vorliegenden Beispiel ein Messtaster zum Einsatz. Anstelle eines taktilen Sensors können auch beliebig andere Sensoren wie beispielsweise ein optischer Sensor oder eine Kamera zum Einsatz kommen.

Die genannten beweglichen Bauteile 3, 6, 7 bilden zusammen eine Mechanik, mittels welcher der Sensor 9 in drei zumindest annähernd unter einem rechten Winkel zueinander verlaufenden Koordinatenachsen derart verfahrbar ist, dass damit die Oberfläche eines auf dem Maschinentisch 2 mittels der Spannvorrichtung 20 festgespannten Werkstücks (nicht dargestellt) vermessen werden kann.

Die Messmaschine 1 umfasst ferner eine Lagerstelle in Form eines Magazins 22. Das Magazin ist vorzugsweise ortsfest auf dem Maschinentisch 2 oder in dessen Nähe angeordnet. Dieses Magazin 22 kann eine Vielzahl von palettierten Werkstücken, d.h. von auf Paletten fixierten Werkstücken, aufnehmen. Im vorliegenden Beispiel besitzt das Magazin 22 beispielhaft drei Lagerebenen, wobei in jeder Lagerebene mehrere mit Werkstücken bestückte Paletten zwischengelagert werden können, wie nachfolgend noch näher beschrieben wird. Das Magazin 22 ist derart auf dem Maschinentisch 2 befestigt und derart, dass Werkstücke oder mit Werkstücken bestückte Paletten von extern in das Magazin 22 überführt und wieder daraus entnommen werden können. Das Überführen von Werkstücken bzw. mit Werkstücken bestückten Paletten von einer externen Stelle in das Magazin 22 erfolgt vorzugsweise manuell. Denkbar ist jedoch auch ein Überführen mittels eines Handhabungsgeräts. Anstelle einer Lagerstelle bzw. eines Magazins können natürlich auch mehrere Lagerstellen bzw. Magazine ggf. auch an unterschiedlichen Orten vorgesehen werden.

Am unteren Ende der Pinole 7 ist zudem ein Greifer 11 angeordnet, welcher sich lateral von der Pinole 7 weg erstreckt. Dieser Greifer 11 dient dazu, Werkstücke bzw. Paletten aus dem Magazin 22 zu entnehmen und an die Spannvorrichtung 20 zu übergeben bzw. der Spannvorrichtung 20 zu entnehmen und in das Magazin 22 zu überführen. Im vorliegenden Beispiel kommt als Greifer 11 ein sogenannter Fingergreifer zum Einsatz, welcher zwei um jeweils eine Achse schwenkbare Finger umfasst, wie nachfolgend noch näher erläutert wird. Ein solcher Fingergreifer 11 eignet sich insbesondere, um Paletten an einer vorgegebenen Stelle, beispielsweise am oberen Ende eines von der Palette nach unten abstehenden Spannzapfens, zu ergreifen. Es versteht sich, dass natürlich auch andere Greiferformen eingesetzt werden können.

Der Greifer 11 wird vorzugsweise pneumatisch oder elektrisch betätigt, wobei die Ansteuerung und Energiezufuhr über Leitungen oder Kanäle an der Pinole 7 erfolgen kann. Vorzugsweise ist der Messkopf 8 und/oder der Greifer 11 austauschbar an der Pinole 7 befestigt. Die sich daraus ergebenden Vorteile werden nachfolgend noch näher erläutert. Alternativ kann natürlich auch ein passiver Greifer, beispielsweise ein Gabelgreifer, eingesetzt werden.

Sofern der Sensor 9 austauschbar an dem Messkopf 8 befestigt ist, kann der Sensor 9 beispielsweise in einem Abstellplatz oder dem Magazin 22 zwischengelagert werden, während ein Werkstück in die Spannvorrichtung 20 überführt oder daraus entnommen wird. Dies hat den Vorteil, dass der Sensor 9 während des Bewegens der Pinole 7, namentlich während des Zuführens eines Werkstücks in die Spannvorrichtung 20 bzw. einer Entnahme daraus, nicht beschädigt werden kann, da er von der Pinole 7 abgekoppelt ist. Es versteht sich, dass ein Zwischenlagern des Sensors 9 insbesondere von den geometrischen Gegebenheiten der Messmaschine 1 und ihrer Komponenten, beispielsweise der Spannvorrichtung 20, abhängt. Vorzugsweise ist die Messmaschine 1 derart gestaltet, dass ein Zwischenlagern des Sensors 9 vollautomatisch erfolgen kann, wobei der Sensor 9 dazu vorzugsweise mittels einer Kupplungsvorrichtung an dem an der Pinole 7 befestigten Messkopf 8 fixiert ist. Eine solche Gestaltung hat den weiteren Vorteil, dass der Sensor 9 durch einen anderen Sensor ausgetauscht werden kann. Dadurch wird zusätzlich ein bedarfsgerechter Austausch und Einsatz von unterschiedlichen Sensoren ermöglicht.

Vorzugsweise ist die zum Befestigen des Sensors 9 allenfalls vorgesehene Kupplungsvorrichtung mit Spann- und Zentrierelementen zum schnellen und genauen Positionieren des Sensors 9 an dem Messkopf 8 versehen. Des Weiteren weist eine solche Kupplungsvorrichtung vorzugsweise Durchführungen zum Durchführen von Steuerleitungen und/oder Messleitungen auf. Ggf. kann natürlich auch eine allfällig notwendige Energiezufuhr über Durchführungen in der Kupplungsvorrichtung erfolgen.

Andererseits kann auch der Greifer 11 mittels einer Kupplungsvorrichtung der genannten Art austauschbar an der Pinole 7 befestigt werden. Das Vorsehen einer Kupplungsvorrichtung bietet den Vorteil, dass auch der Greifer 11 bedarfsgerecht ausgetauscht werden kann. Auch in diesem Fall weist die Kupplungsvorrichtung vorzugsweise Durchführungen zum Durchführen von Steuerleitungen und/oder Messleitungen auf. Ein weiterer Vorteil des Vorsehens einer Kupplungsvorrichtung kann darin bestehen, dass der Greifer 11 während des Vermessens eines Werkstücks ggf. abgelegt werden kann, so dass Kollisionen und damit Beschädigungen des Greifers 11 bzw. von Maschinenelementen vermieden werden können. Zudem kann ein allfälliger Einfluss auf die Messgenauigkeit und damit auf das Messergebnis vermieden werden, da weder das Gewicht des Greifers noch die durch den Greifer auf die Pinole ausgeübten Momente einen nachteiligen Einfluss auf die Messgenauigkeit haben. Dies macht natürlich insbesondere dann Sinn, wenn Werkstücke mit einer sehr hohen Genauigkeit vermessen werden müssen.

Neben dem Maschinentisch 2, welcher üblicherweise aus einer massiven Steinplatte besteht, sind auch die Elemente der Mechanik, namentlich der Messschlitten 3 mitsamt seinem oberen Querträger 4, der Querschlitten 6 sowie die Pinole 7 derart stabil ausgebildet, dass die gesamte Mechanik einerseits hohe Gewichte von beispielsweise bis zu 50 Kilogramm aufnehmen kann, andererseits jedoch trotzdem ein sehr genaues Vermessen von Werkstücken in der Grössenordnung von ca. 700x700x700 Millimetern ermöglicht wird.

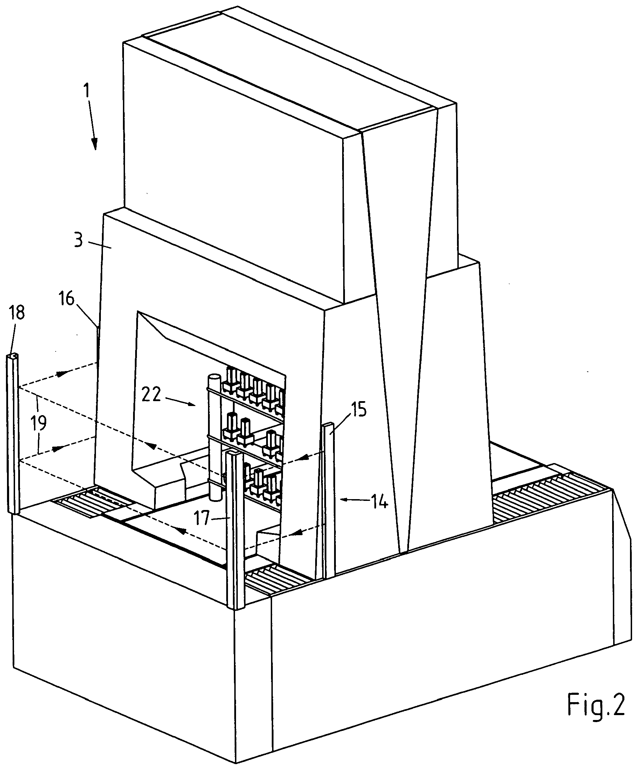

Die Fig. 2 zeigt die Messmaschine 1 in einer Ansicht von der Rückseite. In dieser Darstellung ist insbesondere eine gesamthaft mit 14 bezeichnete Lichtschrankenanordnung erkennbar, welche Verletzungen von Personen durch Bewegen der Mechanik verhindern soll. Die Lichtschrankenanordnung 14 besteht aus einer Sendeeinheit 15, einer Empfangseinheit 16 sowie zwei dazwischen angeordneten Umlenkspiegeln 17, 18. Die Sendeeinheit 15 weist eine Vielzahl von vertikal übereinander angeordneten Sendern auf, während die Empfangseinheit 16 aus einer Vielzahl von vertikal übereinander angeordneten Empfängern besteht. Als Sender kommen beispielsweise Leuchtdioden zum Einsatz, während als Empfänger beispielsweise Photodioden verwendet werden können. Die Sendeeinheit 15 emittiert dabei elektromagnetische Strahlung -Licht- in Richtung des ersten Umlenkspiegels 17, welcher das Licht um 90° in Richtung des zweiten Umlenkspiegels 18 umlenkt. Der zweite Umlenkspiegel 18 lenkt das Licht um 90° in Richtung der Empfangseinheit 16 um. Die Lichtstrahlen sind mittels gestrichelten Linien 19 andeutungsweise dargestellt. Die Lichtschrankenanordnung 14 bildet einen U-förmigen Licht-Vorhang, welcher sich über die Rückseite der Messmaschine 1, um den Messschlitten 3 und das Magazin 22 herum, erstreckt. Sobald dieser Licht-Vorhang unterbrochen wird, beispielsweise durch die Hand einer Person, und sich der Messschlitten in einem die Person gefährdenden Bereich befindet, wird eine gefahrbringende Bewegung der Mechanik, namentlich des Messschlittens 3, des Querschlittens sowie der Pinole, sofort gestoppt. Vorzugsweise ist dazu am Messschlitten 3 ein zusätzlicher Sensor (nicht dargestellt) angeordnet.

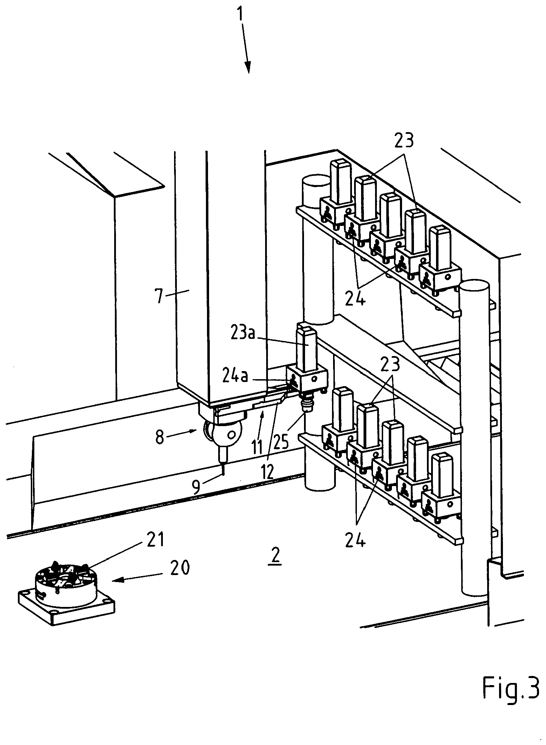

Die Fig. 3 zeigt einen vergrösserten Ausschnitt der Messmaschine gemäss Fig. 1. In dieser Darstellung sind die in zwei Ebenen in das Magazin 22 eingelagerten Werkstücke 23 erkennbar, wobei jedes Werkstück 23 auf einer Palette 24 fixiert ist. In der mittleren Lagerebene sind in diesem Beispiel keine Werkstücke eingelagert. Des Weiteren sind der am unteren Ende der Pinole 7 fixierte Messkopf 8 mit dem endseitig daran angeordneten Messtaster 9 erkennbar. Der Sensor -Messtaster 9- überrragt die Pinole 7 in vertikaler Richtung nach unten hin. Zudem ist der horizontal verlaufende, die Pinole 7 am unteren Ende seitlich überragende Greifer 11 erkennbar, dessen Finger 12 eine Palette 24a mit einem daran fixierten Werkstück 23a greifen. Der Greifer 11 greift dabei am oberen Ende eines von der Palette 24a nach unten abstehenden Spannzapfens 25 an. Mittels des Spannzapfens 25 wird die Palette 24a nach dem Überführen in das Spannfutter 21 der Spannvorrichtung 20 festgespannt. Das Spannfutter 21 ist dazu mit einem pneumatisch betätigbaren Spannmechanismus versehen, wobei das Festspannen einer Palette 24 vorzugsweise mittels Federkraft erfolgt, während das Lösen der mittels Federn vorgespannten Spannorgane pneumatisch erfolgt, so dass bei einem Ausfall oder einem Leck im Pneumatiksystem die Palette fixiert bleibt.

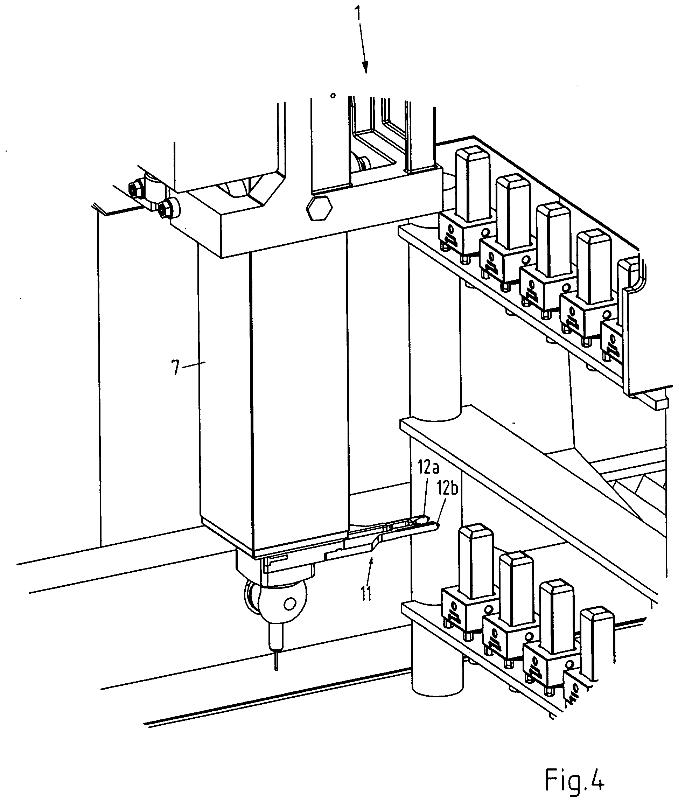

Die Fig. 4 zeigt einen nochmals vergrösserten Ausschnitt der Messmaschine 1. In dieser Darstellung sind insbesondere die beiden Finger 12 des Greifers 11 erkennbar. Der Greifer 11 ist derart am unteren Ende der Pinole 7 angeordnet, dass er diese seitlich überragt.

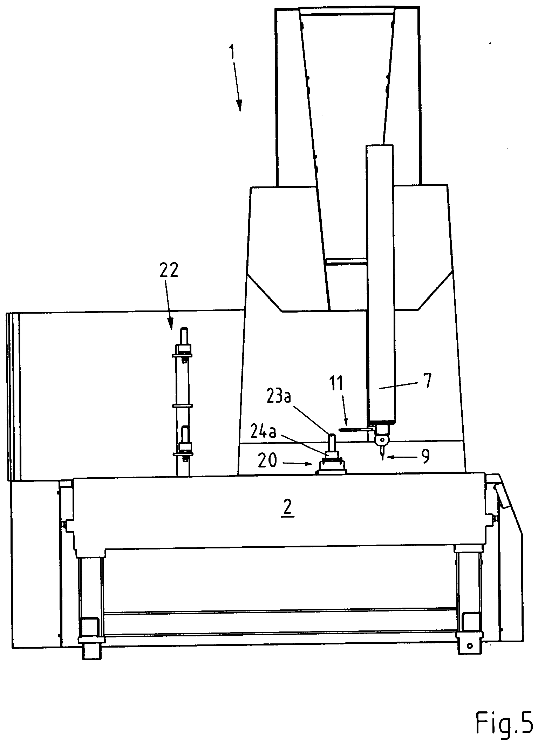

Die Fig. 5 zeigt die Messmaschine 1 in einer schematischen Seitenansicht in geschnittener Darstellung. In diesem Beispiel ist der Werkstückträger 24a -Palettemittels der Spannvorrichtung 20 auf dem Maschinentisch 2 festgespannt. Die Spannvorrichtung 20 ist mit Positioniermitteln versehen, welche ein exaktes Positionieren der Palette zumindest in X- und Y-Richtung ermöglichen. Vorzugsweise sind Positioniermittel vorgesehen, welche die Palette auch in Z-Richtung sowie vorzugsweise auch um zumindest eine Drehachse, besonders bevorzugt um die drei Drehachsen a, b und c positionieren. Mittels der Spannvorrichtung 20 wird auch das auf dem Werkstückträger 24a festgespannte Werkstück 23a fixiert und genau positioniert. Das festgespannte Werkstück 23a kann nun mittels des Sensors 9 abgetastet und vermessen werden. Des Weiteren sind in dieser Darstellung die Pinole 7, der Greifer 11 sowie das Magazin 22 erkennbar.

Wenn im vorliegenden Dokument jeweils von Werkstück gesprochen wird, so ist darunter nicht nur ein Werkstück im herkömmlichen Sinn zu verstehen, sondern der Begriff Werkstück steht stellvertretend auch für Werkzeuge wie beispielsweise Elektroden oder Ähnlichem.

Die Vorteile einer erfindungsgemäss gestalteten Messmaschine lassen sich wie folgt zusammenfassen:
- Kostengünstige Lösung zum automatischen Zuführen von zu vermessenden Werkstücken an den Messplatz und zur automatischen Entnahme davon;
- Einfach realisierbar, da die Lösung auf der bestehenden Mechanik der Messmaschine aufbaut;
- Stand alone Lösung;
- Bestehende Messmaschinen sind ggf. nachrüstbar;
- Platzsparend, da kein zusätzlicher Beladeroboter notwendig ist;
- Je nach Grösse des Magazins/Lagerstelle wird eine Autonomie von mehreren Stunden ermöglicht;
- Betriebssichere Ausführung bei integrierter Schutzeinrichtung wie beispielsweise einer Lichtschrankenanordnung.

Es versteht sich, dass das vorgängig anhand der Zeichnungen erläuterte Ausführungsbeispiel keinesfalls als abschliessend zu betrachten ist, sondern dass im Rahmen des in den Patentansprüchen definierten Schutzumfangs durchaus von dem erläuterten Ausführungsbeispiel abweichende Gestaltungen möglich sind. So sind abweichende Gestaltungen des Greifers beispielsweise in der Form eines Fingergreifers, eines Parallelgreifers, oder eines passiven formschlüssigen Greifers wie beispielsweise eines Gabelgreifers möglich. Aber auch magnetische oder Vakuumgreifer sind ohne weiteres denkbar. Auch das Vorsehen von mehr als einem Greifer und/oder mehr als einem Sensor ist durchaus denkbar. Als Alternative zu einem taktilen Sensor kann auch ein berührungsloser, beispielsweise ein optischer Sensor eingesetzt werden. Auch eine Variation bezüglich der Anzahl und/oder Anordnung der Lagerstelle bzw. des Magazins oder der Magazine ist ohne weiteres möglich. So kann die Lagerstelle beispielsweise auf, über oder neben dem Maschinentisch angeordnet werden. Auch die Ausbildung der Lagerstelle bzw. des Magazins kann unterschiedlich sein, beispielsweise in der Form eins Racks, eines Etagenmagazins, eines Drehturms oder einer Rutsche. Ggf. kann die Mechanik auch mehr als drei Linearachsen und/oder zusätzlich eine oder mehrere Drehachsen aufweisen. Grundsätzlich wäre es auch möglich, das Magazin austauschbar anzuordnen, so dass die zu vermessenden Werkstücke nicht von einer externen Stelle in das Magazin überführt würden, sondern dass jeweils das gesamte Magazin ausgetauscht würde. Dabei würde das mit den bereits vermessenen Werkstücken bestückte Magazin gegen ein anderes Magazin ausgetauscht, welches mit den noch zu vermessenden Werkstücken bestückt ist. Schliesslich können anstelle einer Lichtschrankenanordnung auch alternative, vorzugsweise elektronische Schutzeinrichtungen wie beispielsweise ein Kamerasystem oder eine Laseranordnung vorgesehen werden. Grundsätzlich sind aber auch mechanische Schutzeinrichtungen denkbar.

## Patentansprüche

1. Messmaschine (1) zum Vermessen von Werkstücken (23, 23a), mit einem Maschinentisch (2), einer auf dem Maschinentisch angeordneten Spannvorrichtung (20) zum Festspannen eines Werkstücks, einem Sensor (9), einem Greifer (11) und einer Mechanik, die eine in zumindest drei Linearachsen (X, Y, Z) bewegbare Pinole (7) umfasst, an welcher der Sensor (9) fixiert ist, sodass die Oberfläche eines mittels der Spannvorrichtung (20) auf dem Maschinentisch (2) festgespannten Werkstücks (23a) erfassbar ist, **dadurch gekennzeichnet, dass** der Messmaschine (1) eine Lagerstelle zur Aufnahme einer Mehrzahl von zu vermessenden Werkstücken (23) zugeordnet ist oder die Messmaschine (1) eine Lagerstelle zur Aufnahme einer Mehrzahl von zu vermessenden Werkstücken (23) umfasst, wobei die Pinole (7) derart ausgebildet ist, dass zusätzlich zu dem Sensor (9) auch der Greifer (11) daran fixiert ist, sodass damit ein Werkstück (23) von der Lagerstelle an die Spannvorrichtung (20) übergeben bzw. aus der Spannvorrichtung (20) entnommen und an die Lagerstelle übergeben werden kann.

2. Messmaschine (1) nach Anspruch 1, wobei die zu vermessenden Werkstücke (23, 23a) auf Paletten (24, 24a) angeordnet sind, **dadurch gekennzeichnet, dass** die Spannvorrichtung (20) zum Festspannen der mit Werkstücken (23, 23a) bestückten Paletten (24, 24a) ausgebildet ist und der Greifer (11) dem Erfassen der mit Werkstücken (23) bestückten Paletten (24, 24a) dient.

3. Messmaschine (1) nach Anspruch 1 oder 2, **dadurch gekennzeichnet, dass** die genannte Mechanik einen in einer ersten Linearachse (Y) bewegbaren Messschlitten (3) und einen an dem Messschlitten (3) angeordneten, in einer zweiten Linearachse (X) bewegbaren Querschlitten (6) umfasst, wobei die Pinole (7) an dem Querschlitten (6) angeordnet und in einer dritten Linearachse (Z) bewegbar ist.

4. Messmaschine (1) nach einem der vorhergehenden Ansprüche, **dadurch gekennzeichnet, dass** der Sensor (9) und/oder der Greifer (11) austauschbar an der Pinole (7) angeordnet sind.

5. Messmaschine (1) nach Anspruch 4, **dadurch gekennzeichnet, dass** der Sensor (9) mittels eines Messkopfs (8) an der Pinole (7) angeordnet ist.

6. Messmaschine (1) nach einem der vorhergehenden Ansprüche, **dadurch gekennzeichnet, dass** der Sensor (9) mittels einer Kupplungsvorrichtung an dem Messkopf (8) befestigt ist und/oder dass der Greifer (11) mittels einer Kupplungsvorrichtung an der Pinole (7) befestigt ist.

7. Messmaschine (1) nach einem der vorhergehenden Ansprüche, **dadurch gekennzeichnet, dass** die Messmaschine als Lagerstelle zumindest ein im Bewegungsbereich des Greifers (11) angeordnetes Magazin (22) zur Aufnahme von Werkstücken (23) und/oder von palettierten Werkstücken (23) und/oder von Paletten (24) und/oder zumindest eines Messkopfs (8) und/oder zumindest eines Sensors (9) und/oder zumindest eines Greifers (11) umfasst.

8. Messmaschine (1) nach Anspruch 7, **dadurch gekennzeichnet, dass** das Magazin (22) derart an der Messmaschine angeordnet ist, dass Werkstücke (23) oder mit Werkstücken bestückte Paletten (24) manuell oder mittels eines Handhabungsgeräts von extern in das Magazin (22) überführt und/oder daraus entnommen werden können.

9. Messmaschine (1) nach einem der vorhergehenden Ansprüche, **dadurch gekennzeichnet, dass** auf dem Maschinentisch (2) eine mit Positioniermitteln versehene Spannvorrichtung (20) angeordnet ist, mittels welcher eine Palette (24, 24a) zumindest in X- und Y-Richtung exakt positionierbar und fixierbar ist.

10. Messmaschine (1) nach Anspruch 9, **dadurch gekennzeichnet, dass** die Positioniermittel derart ausgebildet sind, dass die Palette zusätzlich auch in Z-Richtung sowie zumindest um eine Drehachse positionierbar ist.

11. Messmaschine (1) nach Anspruch 9 oder 10, **dadurch gekennzeichnet, dass** die Mechanik derart ausgebildet ist, dass sie den Messkopf (8) und/oder den Sensor (9) und/oder den Greifer (11) an eine Lagerstelle übergeben und/oder daraus entnehmen kann.

12. Messmaschine (1) nach einem der vorhergehenden Ansprüche, **dadurch gekennzeichnet, dass** der Greifer (11) als Fingergreifer, Parallelgreifer, Gabelgreifer, Magnetgreifer oder Vakuumgreifer ausgebildet ist.

13. Verfahren zum Vermessen eines Werkstücks (23, 23a) mittels einer nach einem der vorhergehenden Ansprüche ausgebildeten Messmaschine (1), **dadurch gekennzeichnet, dass** das zu vermessende Werkstück (23a) oder eine mit dem zu vermessenden Werkstück (23a) bestückte Palette (24a) mittels des Greifers (11) aus der Lagerstelle entnommen und an die Spannvorrichtung (20) übergeben wird, dass danach die Oberfläche des Werkstücks (23a) mittels des Sensors (9) erfasst bzw. abgetastet wird, und dass nach dem Ende des Messvorgangs das Werkstück (23a) oder die mit dem Werkstück (23a) bestückte Palette (24a) mittels des Greifers (11) aus der Spannvorrichtung (20) entnommen und an eine Lagerstelle übergeben wird.

14. Verfahren nach Anspruch 13, wobei der Sensor (9) und/oder der Messkopf (8) austauschbar an der Pinole (7) der Messmaschine (1) angeordnet ist/sind, **dadurch gekennzeichnet, dass** der Messkopf (8) und/oder der Sensor (9) vor der Entnahme eines Werkstücks (23, 23a) aus der Lagerstelle und/oder vor der Entnahme eines Werkstücks (23, 23a) aus der Spannvorrichtung (20) von der Pinole (7) abgekoppelt und an eine Lagerstelle ausgelagert wird/werden.

15. Verfahren nach Anspruch 13 oder 14, **dadurch gekennzeichnet, dass** der Greifer (11) vor dem Vermessen eines Werkstücks (23a) von der Pinole (7) abgekoppelt und an eine Lagerstelle übergeben wird.

16. Verfahren nach Anspruch 15, **dadurch gekennzeichnet, dass** der Greifer (11) vor der Entnahme eines Werkstücks (23, 23a) aus der Lagerstelle bzw. vor der Entnahme eines Werkstücks (23, 23a) aus der Spannvorrichtung (20) an die Pinole (7) angekoppelt wird.

## Claims

1. A measuring machine (1) for measuring workpieces (23, 23a) comprising a machine table (2), a clamping device (20) arranged on the machine table for securely clamping a workpiece, a sensor (9), a gripper (11) and a mechanical device comprising a quill shaft (7) movable in at least three linear axes (X, Y, Z) on which the sensor (9) is fixed, so that the surface of a workpiece (23a) securely clamped on the machine table (2) by means of the clamping device (20) can be detected, **characterized in that** the measuring machine (1) is assigned a crib for holding a plurality of workpieces (23) to be measured or the measuring machine (1) comprises a crib for holding a plurality of workpieces (23) to be measured, wherein the quill shaft (7) is configured such that in addition to the sensor (9) a gripper (11) is also fixed thereto, by means of which a workpiece (23) is transferable from the crib to the clamping device (20) or picked from the clamping device (20) and transferred to the crib.

2. The measuring machine (1) as set forth in claim 1, wherein the workpieces (23, 23a) to be measured are arranged on pallets (24, 24a), **characterized in that** the clamping device (20) is configured to clamp the pallets (24, 24a) loaded with workpieces (23) and the gripper (11) serves to grip the pallets (24, 24a) loaded with workpieces (23).

3. The measuring machine (1) as set forth in claim 1 or 2, **characterized in that** the mechanical device comprises a measuring slide (3) movable in a first linear axis (Y) and a cross slide (6) arranged on the measuring slide (3) and movable in a second linear axis (X), the quill shaft (7) being arranged on the cross slide (6) and movable in a third linear axis (Z).

4. The measuring machine (1) as set forth in any of the preceding claims, **characterized in that** the sensor (9) and/or the gripper (11) are arranged so as to be replaceable on the quill shaft (7).

5. The measuring machine (1) as set forth in claim 4, **characterized in that** the sensor (9) is arranged by means of a probe (8) on the quill shaft (7).

6. The measuring machine (1) as set forth in any of the preceding claims, **characterized in that** the sensor (9) is secured by means of a coupling device to the probe (8) and/or the gripper (11) is secured by means of a coupling device to the quill shaft (7).

7. The measuring machine (1) as set forth in any of the preceding claims, **characterized in that** the measuring machine comprises as crib a magazine (22) arranged in the movement range of the gripper (11) for holding palleted workpieces (23) and/or pallets (24) and/or at least one probe (8) and/or at least a sensor (9) and/or at least one gripper (11).

8. The measuring machine (1) as set forth in claim 7, **characterized in that** the magazine (22) is arranged on the measuring machine such that workpieces (23) or pallets (24) loaded with workpieces (23) can be transferred and retrieved manually or by means of a handling device from an external location to the magazine (22).

9. The measuring machine (1) as set forth in any of the preceding claims, **characterized in that** a clamping device (20) provided with positioning means is arranged on the machine table (2) by means of which a pallet (24, 24a) can be precisely positioned and fixed at least in the X and Y direction.

10. The measuring machine (1) as set forth in claim 9, **characterized in that** the positioning means are configured so that the pallet can be additionally positioned also in the Z direction as well as at least about an axis of rotation.

11. The measuring machine (1) as set forth in claim 9 or 10, **characterized in that** the mechanical device is configured such that it can transfer and/or retrieve the probe (8) and/or the sensor (9) and/or the gripper (11) to/from a crib.

12. The measuring machine (1) as set forth in any of the preceding claims, **characterized in that** the gripper (11) is configured as a finger gripper, parallel gripper, fork gripper, magnetic gripper or vacuum gripper.

13. A method for measuring a workpiece (23, 23a) by means of a measuring machine (1) configured as set forth in any of the preceding claims, **characterized in that** the workpiece (23a) to be measured or a pallet (24a) loaded with the workpiece (23a) to be measured is retrieved by means of the gripper (11) from the crib and transferred to the clamping device (20), after which the surface of the workpiece (23a) is sensed or detected by means of the sensor (9) and after completion of the measuring operation the workpiece (23a) or the pallet (24a) loaded with the workpiece (23a) is retrieved by means of the gripper (11) from the clamping device (20) and transferred to a crib.

14. The method as set forth in claim 13, wherein the sensor (9) and/or the probe (8) is/are arranged so as to be replaceable on the quill shaft (7) of the measuring machine (1), **characterized in that** the probe (8) and/or the sensor (9) before retrieval of a workpiece (23, 23a) from the crib and/or before retrieval of a workpiece (23, 23a) from the clamping device (20) is/are decoupled from the quill shaft (7) and parked in a crib.

15. The method as set forth in claim 13 or 14, **characterized in that** the gripper (11), before measurement of a workpiece (23a), is decoupled from the quill shaft (7) and transferred to a crib.

16. The method as set forth in claim 15, **characterized in that** the gripper (11), before retrieval of a workpiece from the crib or before retrieval of a workpiece (23, 23a) from the clamping device (20) is coupled to the quill shaft (7).

## Revendications

1. Machine de mesure (1) servant à mesurer des pièces (23, 23a), avec un plateau de machine (2), un dispositif de serrage (20) disposé sur le plateau de machine, servant à immobiliser par serrage une pièce, un capteur (9), un système de préhension (11) et un mécanisme, qui comprend un fourreau (7) pouvant être déplacé dans au moins trois axes linéaires (X, Y, Z), au niveau duquel est attaché le capteur (9) de sorte que la surface d'une pièce (23a) immobilisée par serrage sur le plateau de machine (2) au moyen du dispositif de serrage (20) peut être détectée, **caractérisée en ce qu'**un emplacement d'entrepôt servant à recevoir une multitude de pièces (23) à mesurer est associé à la machine de mesure (1), ou la machine de mesure (1) comprend un emplacement d'entrepôt servant à recevoir une multitude de pièces (23) à mesurer, dans laquelle le fourreau (7) est réalisé de telle manière qu'en plus du capteur (9), le système de préhension (11) y est également attaché de sorte qu'ainsi une pièce (23) peut être transmise depuis l'emplacement d'entrepôt au dispositif de serrage (20) ou peut être retirée du dispositif de serrage (20) et être transmise à l'emplacement d'entrepôt.

2. Machine de mesure (1) selon la revendication 1, dans laquelle les pièces (23, 23a) à mesurer sont disposées sur des palettes (24, 24a), **caractérisée en ce que** le dispositif de serrage (20) est réalisé afin d'immobiliser par serrage des palettes (24, 24a) chargées de pièces (23, 23a), et le système de préhension (11) sert à agripper les palettes (24, 24a) chargées de pièces (23).

3. Machine de mesure (1) selon la revendication 1 ou 2, **caractérisée en ce que** le mécanisme mentionné comprend un chariot de mesure (3) pouvant être déplacé dans un premier axe linéaire (Y) et un chariot transversal (6) disposé au niveau du chariot de mesure (3), pouvant être déplacé dans un deuxième axe linéaire (X), dans laquelle le fourreau (7) est disposé au niveau du chariot transversal (6) et peut être déplacé dans un troisième axe linéaire (Z).

4. Machine de mesure (1) selon l'une quelconque des revendications précédentes, **caractérisée en ce que** le capteur (9) et/ou le système de préhension (11) sont disposés de manière interchangeable au niveau du fourreau (7).

5. Machine de mesure (1) selon la revendication 4, **caractérisée en ce que** le capteur (9) est disposé au niveau du fourreau (7) au moyen d'une tête de mesure (8).

6. Machine de mesure (1) selon l'une quelconque des revendications précédentes, **caractérisée en ce que** le capteur (9) est fixé au niveau de la tête de mesure (8) au moyen d'un dispositif de couplage, et/ou que le système de préhension (11) est fixé au niveau du fourreau (7) au moyen d'un dispositif de couplage.

7. Machine de mesure (1) selon l'une quelconque des revendications précédentes, **caractérisée en ce que** la machine de mesure comprend en tant qu'emplacement d'entrepôt au moins un magasin (22) disposé dans la zone de déplacement du système de préhension (11), servant à recevoir des pièces (23) et/ou des pièces (23) palettisées et/ou des palettes (24) et/ou au moins une tête de mesure (8) et/ou au moins un capteur (9) et/ou au moins un système de préhension (11).

8. Machine de mesure (1) selon la revendication 7, **caractérisée en ce que** le magasin (22) est disposé de telle manière au niveau de la machine de mesure que des pièces (23) ou des palettes (24) chargées en pièces peuvent être transférées depuis l'extérieur dans le magasin (22) et/ou peuvent en être retirées manuellement ou au moyen d'un appareil de manutention.

9. Machine de mesure (1) selon l'une quelconque des revendications précédentes, **caractérisée en ce qu'**est disposé, sur le plateau de machine (2), un dispositif de serrage (20) pourvu de moyens de positionnement, au moyen duquel une palette (24, 24a) peut être positionnée et attachée avec précision au moins dans une direction X et Y.

10. Machine de mesure (1) selon la revendication 9, **caractérisée en ce que** les moyens de positionnement sont réalisés de telle manière que la palette peut être positionnée en supplément également dans la direction Z ainsi qu'au moins autour d'un axe de rotation.

11. Machine de mesure (1) selon la revendication 9 ou 10, **caractérisée en ce que** le mécanisme est réalisé de telle manière qu'il peut transmettre la tête de mesure (8) et/ou le capteur (9) et/ou le système de préhension (11) à un emplacement d'entrepôt et/ou peut les en retirer.

12. Machine de mesure (1) selon l'une quelconque des revendications précédentes, **caractérisée en ce que** le système de préhension (11) est réalisé sous la forme d'un système de préhension à doigts, d'un système de préhension parallèle, d'un système de préhension à fourche, d'un système de préhension aimanté ou d'un système de préhension sous vide.

13. Procédé servant à mesurer une pièce (23, 23a) au moyen d'une machine de mesure (1) réalisée selon l'une quelconque des revendications précédentes, **caractérisé en ce que** la pièce (23a) à mesurer ou une palette (24a) chargée de la pièce (23a) à mesurer est retirée de l'emplacement d'entrepôt et est transmise au dispositif de serrage (20) au moyen du système de préhension (11), qu'après la surface de la pièce (23a) est détectée ou balayée au moyen du capteur (9), et qu'à l'issue de l'opération de mesure, la pièce (23a) ou la palette (24a) chargée de la pièce (23a) est retirée du dispositif de serrage (20) et est transmise à un emplacement d'entrepôt au moyen du système de préhension (11).

14. Procédé selon la revendication 13, dans lequel le capteur (9) et/ou la tête de mesure (8) sont disposés de manière interchangeable au niveau du fourreau (7) de la machine de mesure (1), **caractérisé en ce que** la tête de mesure (8) et/ou le capteur (9) sont découplés du fourreau (7) avant le retrait d'une pièce (23, 23a) hors de l'emplacement d'entrepôt et/ou avant le retrait d'une pièce (23, 23a) hors du dispositif de serrage (20) et sont sortis de l'entrepôt pour être amené au niveau d'un emplacement d'entrepôt.

15. Procédé selon la revendication 13 ou 14, **caractérisé en ce que** le système de préhension (11) est découplé du fourreau (7) avant la mesure d'une pièce (23a) et est transmis à un emplacement d'entrepôt.

16. Procédé selon la revendication 15, **caractérisé en ce que** le système de préhension (11) est accouplé au fourreau (7) avant le retrait d'une pièce (23, 23a) hors de l'emplacement d'entrepôt ou avant le retrait d'une pièce (23, 23a) hors du dispositif de serrage (20).
